# EUROPEAN PATENT APPLICATION

(11) **EP 2 946 890 A1**
(43) Date of publication of application: **25.11.2015**
(21) Application number: 13871400.1
(22) Date of filing: 15.01.2013
(51) Int. Cl.: B25J 15/06, H05K 13/04

(54) **REDUCED PRESSURE ADHESION DEVICE**

(71) Applicant: Meiko Electronics Co., Ltd., Ayase-shi, Kanagawa 252-1104 (JP)
(72) Inventor: KAWATA, Shigeru, Ayase-shi Kanagawa 252-1104 (JP); SHINGAI, Noboru, Ayase-shi Kanagawa 252-1104 (JP)
(74) Representative: Epping - Hermann - Fischer
(86) International application number: PCT/JP2013/050562
(87) International publication number: WO 2014/112037

(57) **Abstract**

The suction device (1) includes: an suction part (2) formed with a plurality of suction holes (8) and adapted to abut against an suction object (9); side walls (3) and a top wall (4) for forming a negative pressure chamber (10) in cooperation with the suction part (2); a pin-shaped valve body (13) extending from the negative pressure chamber (10) into a suction hole (8); and a closing part (16) adapted to close the suction hole (8) in such a way that the valve body (13) slides in the suction hole (8) causing a portion of the valve body (13) and a portion of the inner wall of the suction hole (8) to come into close contact, wherein the valve body (13) has a root part (13a), which is one end thereof located in the negative pressure chamber (10), the root part (13a) is fixed to a plate-shaped flexible body (17) having flexibility and being bridged between and fixed to the side walls (3) in the negative pressure chamber (10), and the flexible body (17) has a plurality of through-holes (19).

## Description

### Technical Field

The present invention relates to an suction device for adhering by suction and holding a substrate.

### Background Art

It is known that when handling substrates in a substrate manufacturing process, an suction device for adhering by suction and holding a plate material such as a substrate is used (for example, Patent Document 1). An suction device such as one in Patent Document 1 adheres by suction and holds a plate material by taking advantage of negative pressure obtained by sucking air. Specifically, the suction device of Patent Document 1 includes a valve body which is freely movable in a hole to be sucked, and holds a plate material by negative pressure, taking advantage of motion of the valve body acted by gravity.

### Prior Art Document

### Patent Document

Patent Document 1: Japanese Patent Application Laid-Open Publication No. 2005-28489

### Summary of the Invention

### Problems to be solved by the Invention

However, when taking advantage of action by gravity as described above, the device is only usable when the suction hole is oriented downward. That is because if the plate material is placed upper side and the device is oriented upward, the valve body is moved down by gravity, and the valve body itself closes a portion between the negative pressure chamber and the plate material, thereby disabling the sucking and holding of the plate material.

The present invention has been made taking into consideration the above described conventional arts, and it is an object of the present invention to provide an suction device which can surely suck and hold an suction object regardless of the suction direction of air with respect to a plate material (substrate) as the suction object.

### Means for Solving the Problems

In order to achieve the above object, an aspect of the present invention is directed to provide an suction device, comprising: an suction part formed with a plurality of suction holes and adapted to abut against an suction object; side walls and a top wall for forming a negative pressure chamber which is substantially sealed, in cooperation with the suction part; a pin-shaped valve body extending from the negative pressure chamber into the suction hole; and a closing part adapted to close the suction hole in such a way that the valve body slides in the suction hole causing a portion of the valve body and a portion of an inner wall of the suction hole to come into close contact, wherein the valve body has a root part which is one end thereof located in the negative pressure chamber, the root part is fixed to a plate-shaped flexible body having flexibility and being bridged between and fixed to the side walls in the negative pressure chamber, and the flexible body has a plurality of through-holes.

Preferably, the hole diameter of an opening part of the suction hole exposed to the suction object side is not more than 2 mm.

Preferably, a spacing between axes of the suction holes is not more than 3 mm.

### Advantageous Effects of the Invention

According to the present invention, since the valve body has a pin shape and its root part is fixed in the negative pressure chamber, the valve body will not be moved freely in the suction hole by gravity. Therefore, whatever the suction direction of air is with respect to the plate material (substrate) as the suction object, it is possible to prevent the valve body from being moved by gravity causing the suction hole to be closed by the closing part. As a result of this, it is possible to securely suck and hold the suction object. Moreover, even if the suction object has a portion (communication part) which is in communication with the suction hole and therefore in communication with the outside of the suction object, since the root part of the valve body is fixed to the flexible body having flexibility, the flexible body is deflected to move the valve body during suction, thus causing the suction hole to be closed by the closing part, it is possible to maintain negative pressure in the negative pressure chamber, and thereby securely suck and hold the suction object. Moreover, since a plurality of through-holes are provided in the flexible body, the negative pressure chamber will not be closed by the flexible body, and therefore a suction path from the suction pump to the suction hole can be secured, making it possible to surely suck and hold the suction object.

Moreover, arranging the hole diameter of the opening part to be not more than 2 mm makes it possible to decrease the suction force for each individual suction hole. For this reason, even if suction objects are stacked on top of another, and a suction hole and another suction object located further outer side are in communication with each other via the communication part, the other suction object will not be sucked. Therefore, handleability is improved. Further, it has been confirmed that using such a small-diameter suction hole will not cause a suction mark to be generated by the suction hole even if the substrate is a thin glass plate.

Arranging the spacing between axes of the suction holes to be not more than 3 mm results in higher density of the suction holes. It has been confirmed that arranging the spacing as described above makes it possible, even if the suction object has many communication parts as described above, to apply the device to the suction object, and to suck and hold it.

### Brief Description of the Drawings

FIG. 1 is a schematic diagram showing an example of an suction device relating to the present invention.
FIG. 2 is an enlarged schematic diagram showing an example of an suction device relating to the present invention.
FIG. 3 is a schematic diagram of an suction part.

### Mode for Carrying out the Invention

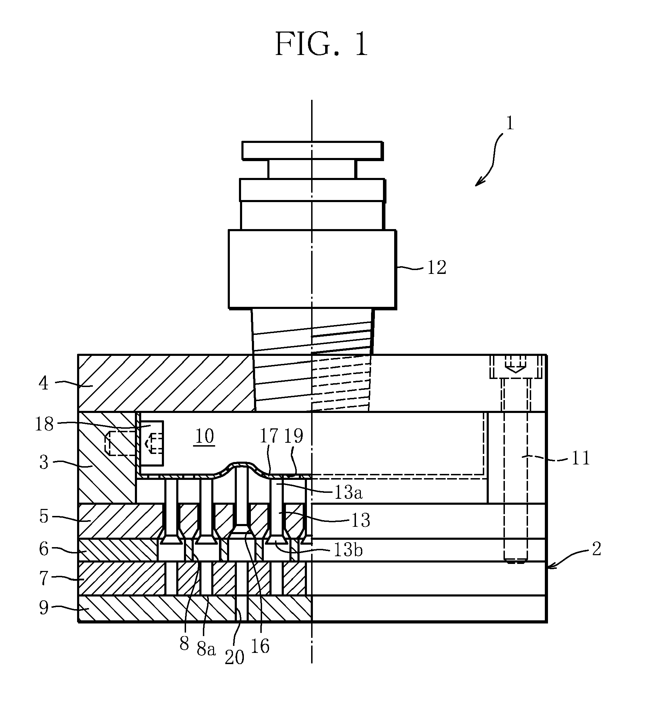

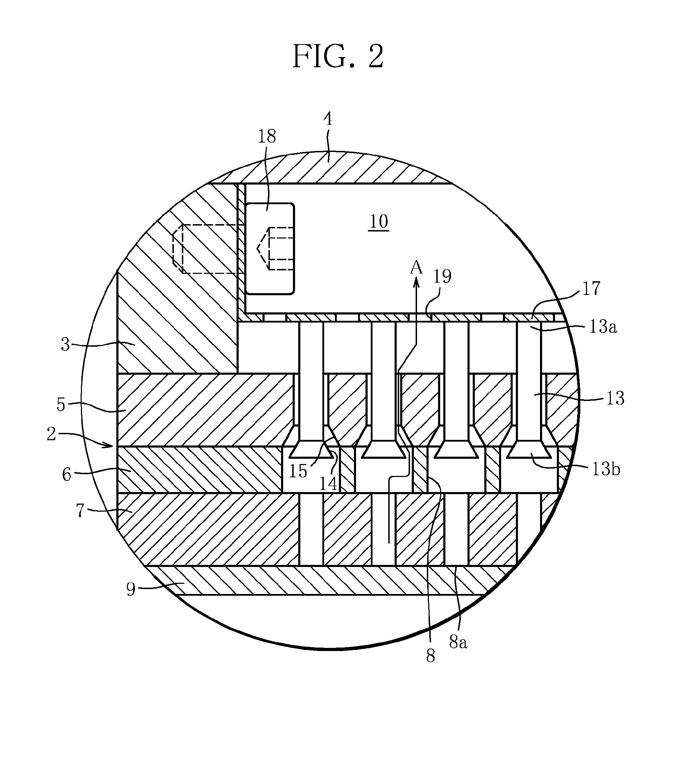

As shown in FIGS. 1 and 2, an suction device 1 according to the present invention includes an suction part 2, side walls 3, and a top wall 4. In this example, the suction part 2 has a three-layer structure in which seat materials 5, 6, and 7 are stacked on top of another. Each seat material 5, 6, 7 has a plurality of through-holes formed through the seat material 5, 6, 7, and these through-holes communicate with each other, forming a suction hole 8. Therefore, a plurality of suction holes 8 are formed in the suction part 2. The seat materials 5 and 6 are formed from, for example, an acrylic plate material. Since a substrate 9 which is an suction object to be sucked and held abuts against the seat material 7, the seat material 7 is preferably a rubber seat made of a rubber.

The side walls 3 and the top wall 4 form a negative pressure chamber 10, which is substantially sealed, in cooperation with the suction part 2. Specifically, four sides are formed from side walls 3 by making them opposed to each other respectively, and a box body is formed by disposing a top wall 4 on one end thereof, and the suction part 2 on the other end thereof. The top wall 4, side walls 3, and seat materials 5 and 6 are fastened and fixed with a bolt 11 to each other. For example, the seat material 7 is fixed to the seat material 6 by bonding. The interior of thus formed box body serves as a negative pressure chamber 10. A connection pipe 12 is provided so as to pass through the top wall 4, and the negative pressure chamber 10 is in communication with a suction pump (not shown) via the connection pipe 12. Operating the suction pump causes the air in the negative pressure chamber 10 to be sucked, so that inside of the negative pressure chamber 10 becomes a negative pressure state.

A pin-shaped valve body 13 is arranged in the suction hole 8. This valve body 13 is slidable in the axial direction of the suction hole 8 in the suction hole 8. A root part 13a, which is one end of the valve body 13, is arranged in the negative pressure chamber 10. The distal end part 13b, which is the other end of the valve body 13, is arranged in the suction hole 8. That is, the valve body 13 extends from the negative pressure chamber 10 into the suction hole 8. The distal end part 13b has a diameter expanded part 14 in which the diameter is gradually expanded toward the distal end. On the other hand, the suction hole 8 (a through-hole formed in the seat material 5 in the figure) has a diameter expanded part 15 in which the diameter is gradually expanded toward the distal end part 13b of the valve body 13. When the valve body 13 slides toward the root part 13a side, the diameter expanded part 14, which is a portion of the valve body 13, and the diameter expanded part 15, which is a portion of the suction hole 8, come into close contact. Thus, as a result of that the diameter expanded parts 14 and 15 come into close contact, a closing part 16 is formed, and the suction hole 8, in which the closing part 16 has been formed, is closed and thereby the passage of air is shut off.

A flexible body 17 is bridged between the opposing side walls 4, and is fixed thereto. The flexible body 17 has flexibility and can use, for example, a rubber seat, a plate spring, or a resin-based plate material. Both ends of the flexible body 17 are screwed with a screw 18 with respect to, for example, the side walls 4. The flexible body 17 is formed with a plurality of through-holes 19 at an appropriate spacing.

Upon sucking and holding of a substrate 9 as an suction object by use of the suction device 1 as described above, at first the seat material 7 of the suction part 2 is abutted against the substrate 9. The above described suction pump is activated in this state, and air inside the negative pressure chamber 10 is sucked. As shown in FIG. 2, since the opening part 8a, which is exposed to the substrate 9 side of the suction hole 8, is closed by the substrate 9, the flow of air sucked by the suction pump becomes as shown by arrow A. That is, air passes from the suction hole 8 through between the suction hole 8 and the valve body 13, and flows out from the negative pressure chamber 10 through the through-holes 19 of the flexible body 17. This results in negative pressure in the negative pressure chamber 10. At this moment, since a flow passage for suction air from the suction pump to the substrate 9 is secured, it is possible to suck and hold the substrate 9 with the suction device 1.

Furthermore, it is possible to suck and hold the substrate 9 regardless of the suction direction of air in the suction hole 8 with respect to the substrate 9. That is, as shown in FIG. 2, the opening part 8a may be oriented downward, sideward, or upward, and be oriented at any angle. This is because, since the valve body 13 has a pin-shape and its root part 13a is fixed in the negative pressure chamber 10, the valve body 13 will not be freely moved by gravity in the suction hole 8. Since the valve body 13 is not acted by gravity, even if suction is performed with the opening part 8a being oriented upward, the valve body will not be moved down by gravity, and therefore the closing part 16 will not be formed. Therefore, regardless of the suction direction of air with respect to plate material (substrate 9) as the suction object, it is possible to prevent the valve body 13 from being moved by gravity, and thus prevent the suction hole 8 from being closed by the closing part 16. For this reason, it is possible to surely suck and hold the substrate 9. Note that although the flexible body 17 is deflected to some extent during suction and thereby the valve body 13 is moved to the negative pressure chamber 10 side, the valve body 13 will not be moved to the negative pressure chamber 10 side to an extent at which a closing part 16 is formed, since a vacuum state is maintained in the negative pressure chamber 10.

On the other hand, the substrate 9 has been subjected to various processing. An example thereof is a through-hole 20 formed through the substrate 9 (see FIG. 1). When such a through-hole 20 exists, air will flow into the suction hole 8 from outside of the substrate 9 if the valve body 13 is fixed as described above so that the negative pressure in the negative pressure chamber 10 is not maintained, and sucking and holding of the substrate 9 will become unstable. However, since the flexible body 17 has flexibility, the flexible body 17 is further deflected by the suction action of the suction pump, thereby moving the valve body 13 toward the negative pressure chamber 10 side. This causes the diameter expanded part 14 and the diameter expanded part 15 to come into close contact, thereby forming a closing part 16. Therefore, the negative pressure state in the negative pressure chamber 10 is maintained to be a vacuum state and it is possible to suck and hold the substrate 9 by other suction holes 8.

The above described through-hole 20 is an example as a portion (communication part) in which the substrate 9 is subjected to shape processing, and thereby a flow path of air is secured between the communication part 20 and the outside of the substrate 9. Another example of such a communication part is a V cut in which the substrate is cut to its intermediate depth at a portion where the substrate is divided in the substrate manufacturing process. Even if the opening part 8a is disposed at this V cut portion, the flexible body 17 is deflected thereby forming a closing part 16, and the negative pressure state in the negative pressure chamber 10 is maintained. For making only the valve body 13, which is inserted into the suction hole 8 disposed at a communication part, slide in this way, it is preferable to provide perforations 19 in the periphery of the location where the root part 13a is fixed. As a result of this, it is possible to surely make only the relevant valve body 13 be moved in a sliding manner. Moreover, since such movement of the valve body 13 is automatically performed during suction, it is possible to perform sucking and holding work without taking into consideration the position of the communication part formed in the substrate 9, which is therefore efficient. Moreover, it is also possible to change the amount of deflection by changing the material etc. of the flexible body 17.

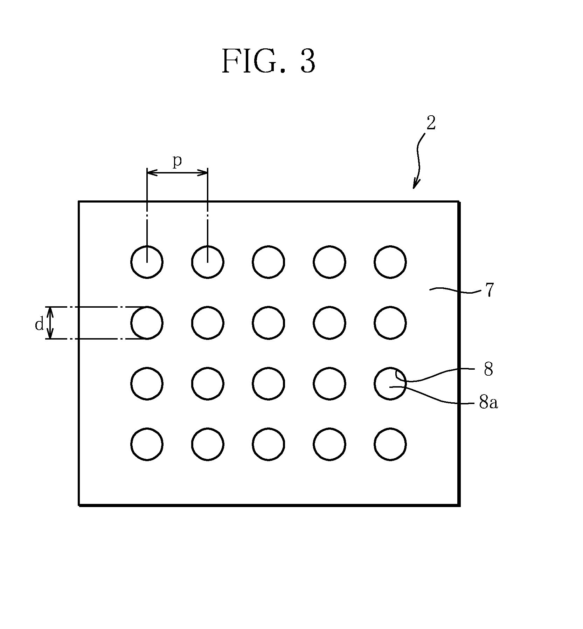

As shown in FIG. 3, in the seat material 7 included in the suction part 2, the opening part 8a of the suction hole 8 is exposed to the side of the substrate 9 as the suction object. The hole diameter d of the opening part 8a is preferably not more than 2 mm. Arranging the hole diameter of the opening part 8a not more than 2 mm makes it possible to decrease the suction force of individual suction hole 8. For this reason, even if s substrates 9 as the suction object is placed in a stacked manner, and another suction object located further outer side and the suction hole 8 are in communication with each other via the above described communication part 20, the another suction object 9 will not be sucked. Therefore, handleability will be improved. Moreover, it has been confirmed that using a suction hole 8 having such a small diameter will result in that a suction mark through the suction hole 8 is not generated even if the suction object 9 is a thin glass substrate.

Moreover, as shown in FIG. 3, the spacing between axes of the suction holes 8 is preferably not more than 3 mm. Arranging the spacing p between axes of the suction holes 8 to be not more than 3 mm result in denser distribution of the suction holes 8. It has been confirmed that by arranging the spacing as described above, even if a large number of communication parts 20 as described above are present in an suction object 9, it possible to apply the device to such suction object 9 to suck and hold it.

### Explanation of Reference Signs

- 1: Suction device
- 2: Suction part
- 3: Side wall
- 4: Top wall
- 5: Seat material
- 6: Seat material
- 7: Seat material
- 8: Suction hole
- 8a: Opening part
- 9: Substrate (Suction object)
- 10: Negative pressure chamber
- 11: Bolt
- 12: Connection pipe
- 13: Valve body
- 13a: Root part
- 13b: Distal end part
- 14: Diameter expanded part
- 15: Diameter expanded part
- 16: Closing part
- 17: Flexible body
- 18: Screw
- 19: Through-hole
- 20: Through-hole (communication part)

## Claims

1. An suction device, comprising:
a suction part formed with a plurality of suction holes and adapted to abut against a suction object;
side walls and a top wall for forming a negative pressure chamber which is substantially sealed, in cooperation with the suction part;
a pin-shaped valve body extending from the negative pressure chamber into the suction hole; and
a closing part adapted to close the suction hole in such a way that the valve body slides in the suction hole causing a portion of the valve body and a portion of an inner wall of the suction hole to come into close contact, wherein
the valve body has a root part which is one end thereof located in the negative pressure chamber,
the root part is fixed to a plate-shaped flexible body having flexibility and being bridged between and fixed to the side walls in the negative pressure chamber, and
the flexible body has a plurality of perforations.

2. The suction device according to claim 1, wherein
a hole diameter of an opening part of the suction hole exposed to the suction object side is not more than 2 mm.

3. The suction device according to claim 2, wherein
a spacing between axes of the suction holes is not more than 3 mm.
